# EUROPEAN PATENT SPECIFICATION

(11) **EP 1 362 665 B1**
(45) Date of publication and mention of the grant of the patent: **18.01.2006**
(21) Application number: 03425302.1
(22) Date of filing: 12.05.2003
(51) Int. Cl.: B23Q 1/54, B23Q 1/70, B27M 1/08, B23Q 5/04

(54) **An anthropomorphic head for machine tools with an operating unit with reduced radial dimension**
Antropomorpher Werkzeugmaschinenkopf mit einer Arbeitseinheit von reduzierten radialen Abmessungen
Tête anthropomorphe pour machines-outils avec une unité opérationnelle de dimension radiale réduite

(30) Priority: 13.05.2002 IT RN20020012 U
(43) Date of publication of application: 19.11.2003
(73) Proprietor: SCM GROUP S.p.A., 47900 Rimini (IT)
(72) Inventor: Maioli, Fabio, 47822 Santarcangelo di Romagna (Rimini) (IT)
(74) Representative: Lanzoni, Luciano

(56) References cited:
- DE-A- 2 451 292
- DE-A- 3 219 072
- US-A- 5 533 846

## Description

The present invention relates to a jointed head, of the type also known by the name anthropomorphic head, designed for application on machine tools for woodworking, in particular on machining centres for routing and boring wooden panels or workpieces, with a tool which can be positioned on two or more machining axes.

Such machines live the one disclosed in the documents DE 3219072, forming the base of the preamble of claim 1, and DE 2451292 are well known in the sector of secondary machining of wood and similar products, in particular for the production of furniture. The routing performed on said machines is needed to obtain the finished parts from wooden workpieces, normally in the form of a panel, which are routed both on their edges, to obtain a border with various shapes, and sometimes on other parts of their surfaces, to mould them, that is to say, to obtain cavities and bored holes angled according to various axes.

Typical applications for these machining operations are found, for example, in the production of moulded doors for high quality kitchen furniture.

In the above-mentioned machining centres the workpieces are normally positioned on a machine worktable, and fixed there with known systems, so that the required routing and boring can be started.

On such machines it is, therefore, necessary to allow the routing tool to reach the greatest possible number of positions on the workpiece, depending on the workpiece resting and fixing constraints. This is determined by the greater or lesser reciprocal mobility on the machine between the tool supporting head and the machine worktable where, in the most common cases, the worktable is fixed and the tool holder head is allowed all degrees of freedom.

A problem to be solved - relative to the solutions currently existing, and to the disadvantages inherent in them - is not just the problem of assigning all necessary degrees of freedom to the tool, but - at the same time - the technical problem of optimising tool accessibility on the workpiece, simultaneously maintaining the considerable compactness of the solution used.

Prior art in the sector of such anthropomorphic heads for machining centres refers to heads substantially with a kinematic chain configuration which, by means of limbs arranged in succession and jointed by means of rotary pairs or ball joints, can position the tool at the required co-ordinates, obviously within a given range of permitted mobility.

Basically, such anthropomorphic heads consist of a set of joints or "wrists" (making them anthropomorphic) which connect the succession of limbs forming the kinematic chain for tool positioning, that also give it the necessary rotational degrees of freedom, required to angle its axis according to the different possible directions. In contrast, the desired translation movements in the three directions - which are obviously omitted in the descriptions that follow - are obtained by moving a limb located at the origin of such heads, slidably connected on a mobile machine element, which normally coincides with the mobile upright above the machine worktable.

At the end of the kinematic chain, the cutting rotation of the tool is driven either by a shaft transmission and relative circular and/or bevel connecting gears, which pass inside the limbs to transmit the cutting rotary motion from the origin of the chain to the tool at the end of the chain (where gears or joints are substantially arranged in the wrists of the chain), or tool cutting rotation is driven by a customary electrospindle at the end of the chain which transmits the cutting rotation directly to the tool.

First solutions of such jointed heads, developed by various manufacturers, include the possibility of angling the tool axis in all directions of a vertical plane "p" constantly perpendicular to the machine worktable (horizontal), by means of a circular star support with two or more tools arranged radially on the star, in turn contained in the plane "p". In these solutions a first rotary joint with vertical axis (U1) angled a first limb on which the star was rotatably supported about a horizontal axis (U2) passing through its centre and perpendicular to its plane "p". Things were also usually arranged so that the vertical axis (U1) also passed through the centre of the star, where a system of shafts inside the limbs of the chain transmitted the rotary motion to the tools.

In jointed heads developed according to these solutions, for example, by the Italian company CTC, the kinematic chain was more sophisticated and versatile than previously, with a first limb which rotated about a first vertical axis (U1), perpendicular to the machine worktable, in turn having a rotary joint whose axis (U2) was incident with a point C and was angled at 45° to the previous axis (U1). On this rotary joint with axis (U2) there turned - relative to the first limb - the body of a normal electrospindle, whose tool axis (U3) was arranged incident with the previous two axes (U1) and (U2) at point C common to both, and was set at 45° degrees to the axis (U2). In this way, the tool axis (U3) could be turned from a vertical direction to a horizontal direction, by simply turning the electrospindle about the axis (U2), where all of the horizontal directions were made possible for the axis (U3) by simply turning the first limb about the axis (U1).

A similar solution was achieved by substituting the 45° angle in the above description with a 90° angle, so that the axes U1 and U2 were at a right angle to one another, and the tool axis U3 could describe the plane perpendicular to the axis U2 and passing through point C.

The above-mentioned solutions for production of the jointed heads on one hand solved the problem of allowing the tool the necessary degrees of freedom quite satisfactorily but, on the other hand, had the disadvantage of not allowing satisfactory tool accessibility to all parts of a workpiece fixed directly to the machine worktable, particularly with reference to machining to be performed on the lateral edge of the workpiece, for example, boring with a horizontal axis in the workpiece middle plane. This applied above all in terms of interference between the head - or the part of it designed to support the tool - and the machine worktable.

The disadvantages described are easily deducible from the previous qualitative descriptions.

With reference to the first solutions mentioned, it is understandable how the tool holder star could easily perform boring and routing on a workpiece fixed directly to the machine worktable, if and only if the machining required the tool to be positioned vertically. If the boring had to be carried out on the middle plane of a panel, with the tool axis positioned horizontally, obviously due to interference between the star and the table, the workpiece being machined could not rest directly on the machine worktable, but required special spacer supports, of the known type, to distance the panel from the worktable, at least by a measurement equal to the radius of the star. Therefore, heads made according to the first solutions had the serious disadvantage of requiring that the workpiece be placed on said spacers rather than directly on the machine worktable. Moreover, such positioning in itself brought the secondary disadvantage of having to assign the head the movement strokes in the direction Z perpendicular to the machine worktable, designed to compensate for the different machining height (comparable to the star radius) when passing between a boring/routing operation with a horizontal axis (star in raised position) and an operation with a vertical axis (star in lowered position), and vice versa.

To summarise, the above-mentioned first solutions, were limited by the "minimum machining height Hmin allowed" parameter of the horizontal tool relative to the machine worktable, a parameter which depended on the radius of the star.

With reference to the second solutions, the limitation imposed by the minimum machining height Hmin allowed relative to the machine worktable also existed, although for different reasons.

Considering the second solutions of heads in the machining position with the tool axis parallel with the machine worktable (horizontal), it was the radial dimension of the electrospindle electric motor's rotor and stator pack that formed the obstacle which meant that the radial distance of the spindle shaft relative to the machine worktable had to remain greater than or equal to that value Hmin, basically comparable to the radial dimension of the electric pack. Where, due to considerable spindle powers (from approximately 10 kW upwards), its radial dimension became very considerable, not even the flattening often made under it - that is to say, opposite the fitting with its supporting kinematic chain - could be of any significant benefit regarding the possibility of radial proxmity between the spindle and the machine worktable. So, the second solutions also required the use of spacer supports for positioning workpieces, although without the disadvantage of having to perform compensating strokes when the tool axis passed from vertical to horizontal, characteristic of the first solutions.

The above indicates how the jointed head architectures described in the prior art, like other functionally equivalent architectures, do not in themselves contain elements useful for simultaneously solving both the problem of assigning the tool the necessary degrees of freedom, and the problem of extensive and unconditional access to all lateral parts of a workpiece fixed directly to the machine worktable, therefore, for machining operations with the tool axis parallel with the machine worktable and for reduced Hmin heights relative to the worktable, necessary for correct operation of the axis.

The aim of the jointed head disclosed in the present invention is to overcome the above-mentioned disadvantages. Accordingly the present invention, as described in the claims herein, solves the problem of producing a device in the form of an anthropomorphic jointed head for supporting a tool for routing/boring on machining centres. Basically this device does not have the problem of an excessive minimum machining height Hmin allowed, which would necessitate spacer accessories for fixing workpieces to the machine worktable. The device in the form of a head must simultaneously have extremely simple construction and versatile operation, and it must retain all of the positive functional characteristics of previous solutions, or better still, improve on them.

The idea developed hereinafter achieves the preset aims with a head configuration of the above-mentioned type, to be attached to the crosspiece (normally mobile) above the machine worktable designed for fixing the workpieces to be machined on the machining centre.

More precisely, it is a jointed machining head, for a machine tool which machines wooden workpieces on a machine worktable, configured as a kinematic chain with at least one first joint R1 able to rotate about at least one joint geometrical axis W1. The head comprises a compact motor-driven unit which drives the rapid rotation of a routing tool about an axis identified in said unit, and where the unit can be positioned by the kinematic chain at least in an operating position in which the axis of tool rapid rotation is parallel with the machine worktable.

The special feature of this head is the fact that the compact motor-driven unit comprises, within a shaft support casing, a first driving part, consisting of an electric motor whose rotor is a first, driving shaft, with a first axis of rotation 7a identified in the unit; and a second, operating part, consisting of a second, operating shaft, having a second axis of rotation 8a identified in the unit, parallel with and close to the previous driving axis 7a, and with an operating end 8e designed to provide coaxial support for the tool operating outside the casing, so that the tool takes the second axis of rotation 8a as its own axis of rapid rotation. The second shaft is rotationally driven by the first, driving shaft by means for transmitting rotational motion.

In such a solution, due to the absence of the electric pack on the second shaft, the casing is advantageously made with a much reduced dimension along the radial half-lines s originating from the second axis of rotation 8a and moving away from the first axis of rotation 7a, so that in the one or more operating positions where the tool axis is parallel with the machine worktable, the radial distance between the second, operating shaft and the machine worktable, and each workpiece being machined is very small.

With this special layout of the elements in the invention, the transmission elements acting between the shafts and the driving and operating parts are also specified, in the form of a toothed belt and relative pulleys at the non-operating end of the driven shaft. In addition, the presence of means designed to lock and release the tool is specified, although the claims only cover their positioning and compatibility with the architecture of the motor-driven unit described above, since their other aspects are substantially known.

Moreover, again depending on the special layout of the elements in the invention, the structure of the kinematic chain over the unit is also specified, configuring the head as a whole. In the case in question the positions of the joint axes of the anthropomorphic head are specified. In particular, the geometrical axis W1 of the joint R1 may be perpendicular to the machine worktable, whilst the axis 8a of the operating shaft may be parallel with the worktable.

Moreover, the kinematic chain forming the head may have at least one additional joint R2 with an axis of rotation W2, where the axes W1 and W2 would be incident with one another at a point C at least for a set of head positions. For said set of head positions, the first joint R1 would allow rotation of the axis W2 about the axis W1 according to a cone with vertex C and half-opening equal to 45°, the second joint R2 would allow rotation of the axis 8a about the axis W2 according to a cone with vertex C and half-opening equal to 45°, so that in the particular case in which the axis W1 is perpendicular to the machine worktable, the tool axis of rotation 8a could occupy - by means of 180° swinging about the axis W2 - both an operating position parallel with the machine worktable, and an operating position perpendicular to the worktable, and coinciding with the axis W1.

The advantages obtained with the present invention derive from many circumstances, already indicated, the most important being the possibility of fixing the workpiece being machined directly to the machine worktable, without the need for additional spacer apparatus.

In addition, the architecture of a head made according to the present invention does not require any compensating stroke (as seen above) to pass from vertical to horizontal routing/boring, and above all the minimum machining height Hmin allowed for the tool on the horizontal axis is significantly lower than all of the architectures previously known in the prior art, where this may be attributed to the particular structural configuration of the invention, in which the radial dimension of the stator and rotor electric packs has been completely removed to the driving shaft, which has been separated from the operating shaft, so that around the latter there are only the dimensions of the elements needed to support rotation of the operating shaft, providing the minimum dimensions necessary.

The invention is described in more detail below, with reference to the accompanying drawings, which illustrate a preferred embodiment, without limiting the scope of its application. With the sole aim of making references clearer, some mention is made of elements of the machine normally attached to the head disclosed. Therefore, with reference to a set of three machine axes X, Y, Z, at right angles to one another, where the machine worktable for fixing the workpieces lies horizontally on XY, and X indicates the direction of movement of the upright which supports the head over the machine worktable:

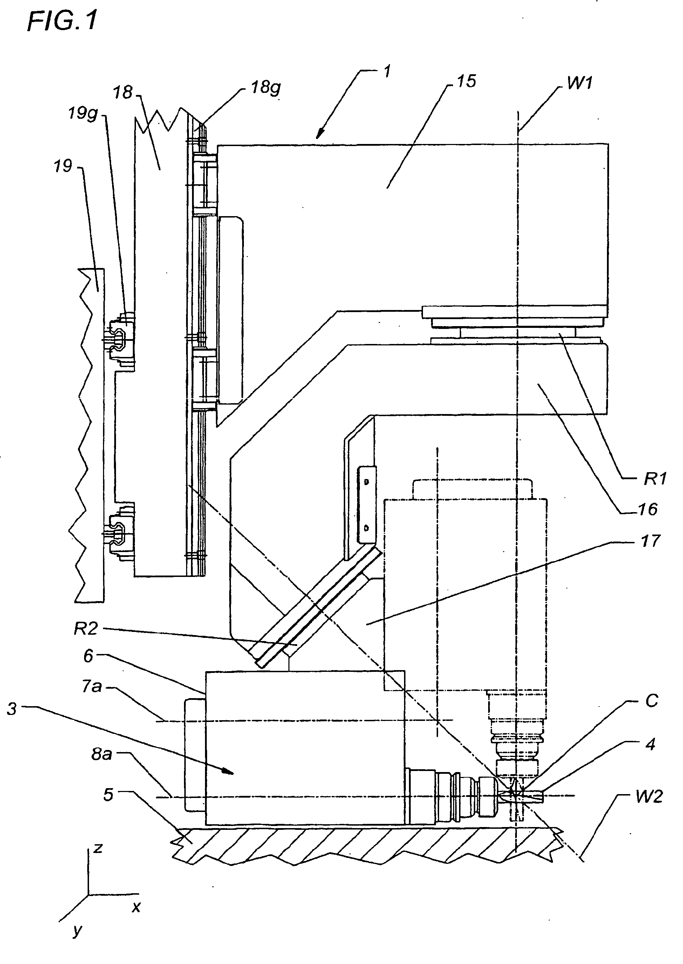

- Figure 1 is a side view, according to the Y axis, of the anthropomorphic head assembly in which all of its significant axes are in the same plane in the drawing. The head is also illustrated connected, by an intermediate slide, to the machine mobile upright, with which it acquires the three necessary degrees of freedom X, Y, Z of translation over the machine worktable, and can move over a predetermined worktable machining zone. The compact motor-driven unit is illustrated in the two limit positions, both with the axis parallel with the machine worktable, and with the axis perpendicular to the worktable;
- Figure 2, with reference to the same configuration in which the head kinematic chain is illustrated in the previous figure, is a front view, according to the tool axis, of the compact motor-driven operating unit only;

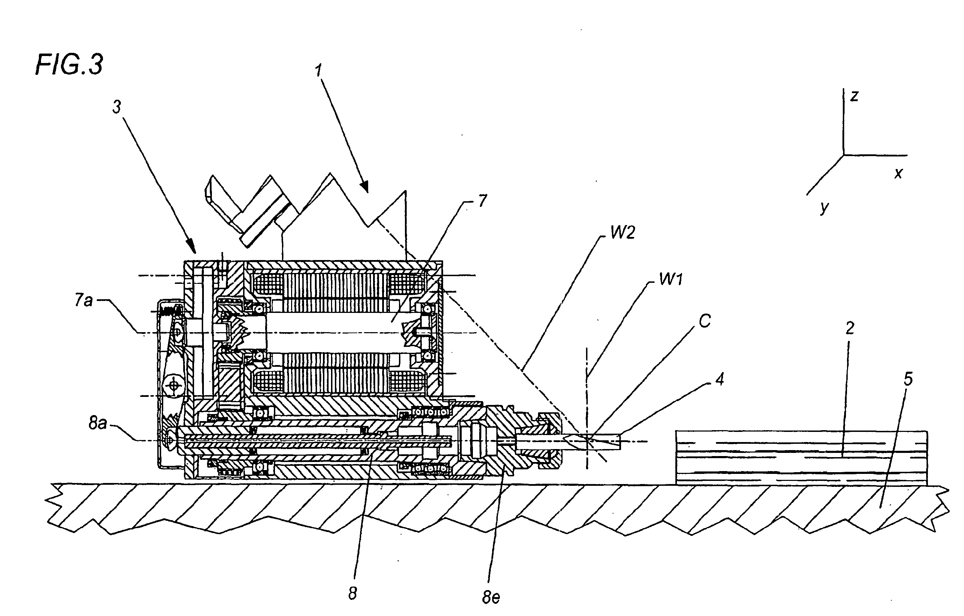

- Figure 3 derives from Figure 1, but the compact motor-driven unit is represented in cross-section, with the operating axis parallel with the machine worktable, for routing/boring with a horizontal axis;
- Figure 4 is directly taken from Figure 3, but further enlarged.

This device in the form of a jointed machining head 1, particularly innovative as regards the solution relating to the compact motor-driven operating unit proposed, and at the same time very simple, basically comprises a kinematic chain with substantially known layout, consisting of three limbs 15, 16, 17, jointed to one another in succession, to form an arm, by two wrist joints R1 and R2, where each of the wrists is - from the connecting viewpoint - a rotary joint with axis of rotation W1 or W2. The joint R1 is located between the limbs 15 and 16, and the joint R2 is between the limbs 16 and 17, where the limb 17, immediately downstream of the joint R2, has a special casing 6 structure, forming the outer cover of the compact motor-driven unit 3 which supports and drives the tool 4, and designed to enclose its mechanisms.

The head limb 15 is, in turn, slidably supported by a machine slide 18, inserted between the head limb 15 and the machine upright 19, which is mobile along its X axis. The slide 18 in turn has both guides 18g on one of its faces, angled according to the Z axis and on which the limb 15 can slide vertically, and counter-guides on its other face, designed to allow the slide 18 to slide on the guides 19g on the upright, angled according to the direction Y. Therefore, the slide 18 is a type of cross-shaped slide which, combined with the mobility of the upright 19 in direction X, guarantees the three degrees of freedom in head translation X, Y, Z.

Obviously, the joints R1 and R2, like the other movements, are motor-driven and controlled according to the usual solutions (which are, therefore, not described in further detail), designed to allow the desired positioning of the head 1 limbs in predetermined successive configurations, and in particular to angle the tool axis according to any direction.

The joint R1 by which the limb 15 supports the next limb 16, is positioned in such a way that its axis of rotation W1 is perpendicular to the machine worktable 5, designed for fixing the workpieces 2, and therefore angled like the machine Z axis.

The subsequent joint R2, by which the limb 16 supports the next limb 17, is positioned in such a way that its axis of rotation W2 is incident with the previous axis W1 at a point C on it, and so that the axis W2 is set at 45° to the axis W1. In this way, the axis W2 is also set at 45° to the machine worktable 5 and, thanks to the joint R1, the axis W2 can describe the lateral surface of a cone with vertex C and axis W1, having half-opening equal to 45°.

In other words, rotation of the limb 16 on the limb 15 induces rotation of the axis W2 about the vertical axis W1 according to the aforementioned method.

Immediately downstream of the joint R2, and rotatably connected by it to the previous limb 16, is the limb 17, as indicated above.

The part of the limb 17 adjacent to the joint R2 has a flat connecting surface to which the casing 6 is attached by threaded connections. The casing delimits the compact motor-driven unit 3 which supports and drives the tool 4, considered part of the third limb 17.

The unit 3 casing 6 is particularly suitable for housing two parallel shafts 7 and 8, rotating relative to the casing 6 about respective geometrical axes 7a and 8a identified in it by means of suitable bearing seats, where, of the two, the shaft 8 is designed to support the routing/boring tool, as indicated in further detail below.

The connection between the casing 6 and the flat surface of the limb 17 is, during construction, made such that the plane identified by the two parallel axes 7a and 8a also contains the axis W2 of the limb 17, where the angle according to which the parallel axes 7a and 8a cut the axis W2 is equal to 45°.

It should be noticed that these geometrical requirements may be satisfied by the methods used for construction of the individual limb 17, since in said limb the axis of rotation W2 of the joint

R2 is perfectly identified - irrespective of the connection to the previous limb 16 - by the part of joint R2 included in the limb 17 and designed to be connected to the remaining part of the joint R2 included in the other limb 16.

Another important head 1 characteristic derives from the correct provision of the method used to connect the limb 17 to the limb 16. That is to say, the characteristic by which the point at which the axes 8a and W2 meet coincides with the point C previously defined as the intersection of axes W1 and W2, where in particular this property is achieved by correctly setting the axial distance between the ring nuts of the joint R2.

The above-mentioned mutual relationships which - for correct interaction - connect the elements of the supporting kinematic chain, some aspects of which are known, and the special production features of the motor-driven tool holder unit 3, confirm the fact that the head 1 must be considered a single functional assembly, in which operation is guaranteed - in accordance with the claims and the description of the present invention - both by observing the mutual arrangements between the elements of the kinematic chain and those of the operating unit 3, and by the special features of the unit 3.

The structure of the compact motor-driven unit 3 is now described in greater detail.

As already indicated, it is delimited by the casing 6, and is substantially separated into two parts, of which one is a driving part, extending around a geometrical axis 7a, and one is an operating part, driving the tool and extending around a geometrical axis 8a. The axes 7a and 8a are identified in the casing 6 by relative bearing seats and are parallel with one another.

The driving part has an electric motor whose rotor is a shaft 7 with geometrical axis 7a, supported by the casing 6 by means of rolling bearings, and which has a conventional electric pack consisting of a rotor which in turn - with an air gap - turns in a conventional electric pack consisting of stator windings, according to customary electrical engineering solutions.

At one end of the shaft 7 - which may be called the front relative to the front of the operating unit 3 - the casing has a secondary service cover 20, for maintenance or substituting the front supporting bearing, whilst at the opposite end - which may be called the back - the shaft 7 has a toothed pulley 7p for a toothed belt 10, and is supported by a rear bearing.

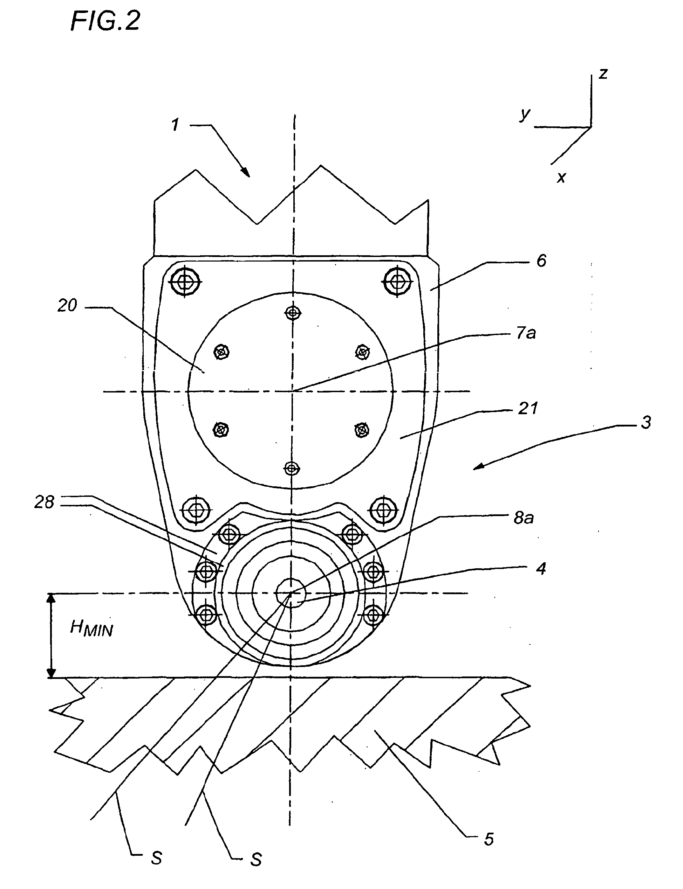

At the ends of the shaft 7, the casing 6 also has end plates 21 and 22 housing the roller bearings, the end plates being removable from the casing 6, to give it the modularity which allows the assembly/disassembly of internal parts, according to the solutions applied in the shaft casings. The upper part of Figure 2 illustrates both the secondary service cover 20, and the removable end plate 21 of the casing 6, designed to support the bearing on the front end of the shaft 7.

In contrast to the end plate 21, in view in the casing 6 and forming the casing front closure, the end plate 22 which is the seat of the shaft 7 rear bearing, is inside the casing 6.

Continuing the structural description in the direction of transmission of the motion originating from the driving shaft 7, there is - keyed to the shaft 7 - the pulley 7p which transmits the motion to the toothed belt 10, which in turn transmits it to the operating part of the unit 3.

Said operating part is separated from the driving part by an incomplete ridge 29, which also has structural functions for the casing 6, and identifies a compartment in the casing 6 which, with reference to a horizontal shaft 7 position, is below the compartment where the driving part is located. An axially hollow shaft 8, with geometrical axis 8a and supported by roller bearings in the lower part of the casing 6, is the basic element of the operating part.

At one end 8f of the shaft, the back, being located at the pulley 7p of the previous shaft 7, a toothed pulley 8p is keyed, suitable for engaging with the toothed belt 10, and for using the belt to receive the motion generated by the driving shaft 7.

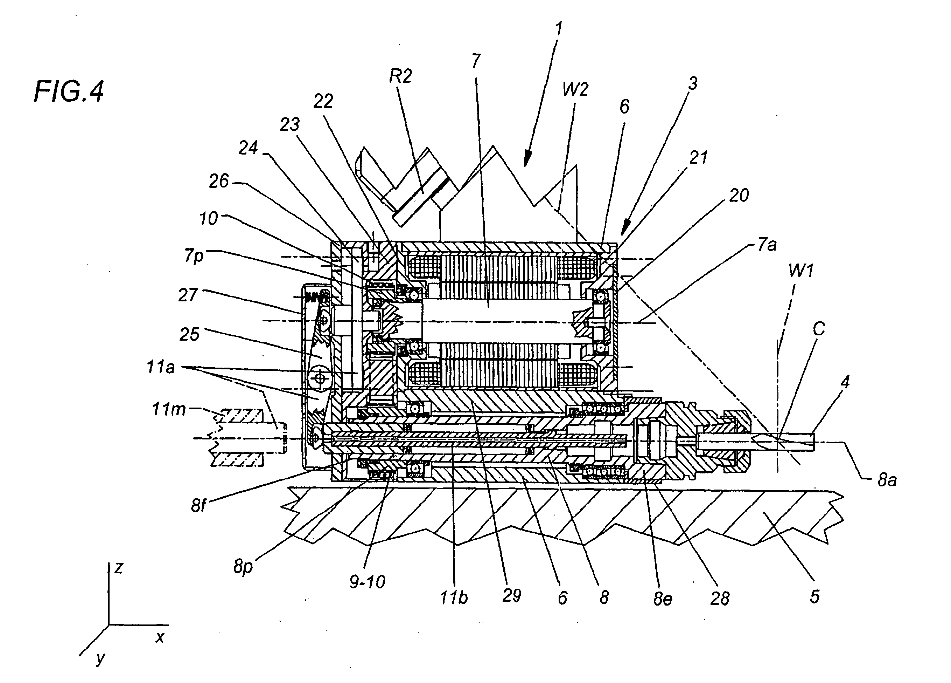

At the other end 8e of the shaft 8 - which may be called the operating end, since the tool 4 is positioned on it - the casing has an opening for shaft 8 output, with a cover 28 that also has an opening, partly designed to retain bearings located at the operating end 8e. Figure 2 provides a front view of the fastening screws and the edge of the cover 28. As is also evident in Figure 4, the radial dimension necessary to support the operating shaft 8 is noticeably reduced compared with that required for the driving shaft 7, which must be surrounded not only by the bearings, but also by the rotor and stator electric packs.

As indicated, the shaft 8 has an axial through cavity, terminating at the operating end 8e in a cone-shaped seat, and suitable for receiving standard taper shanks, for example, of the HSK type in accordance with DIN standards. The axial cavity houses part 11b of the set of systems 11 usually used to lock/release the holder of the tool 4, that is to say, a control rod, a pack of Belleville washers surrounding the rod, and the tool holder expanding collet, some of these elements only partially illustrated in the accompanying drawings, or not at all in the cavity, since they refer to prior art. The part 11b of the set of locking/release systems 11 housed in the shaft cavity is driven by an actuator part 11a for the set of systems 11. The actuator part 11a consists of a shaped plate 23, connected on one side to the end plate 22 and to other elements of the casing 6, whilst the other side forms the body of a pneumatic cylinder with geometrical axis 7a, having a cylindrical cavity for a large-diameter piston 24 driven by compressed air, which slides along the axis 7a. A cover 26 acts as the base for both the body of the pneumatic cylinder and the unit 3 casing 6, and also has a fulcrum for a rocker arm 25, which transfers the piston 24 stroke to the tool release control rod.

In said pneumatic cylinder, the air arriving from the distribution network flows to/from the two chambers in the cylinder through special holes, and using customary pneumatic distribution components, controlled by a control device.

A light service cover 27 is located at the very back of the casing 6, protecting the rocker arm from dust. There is a hole at the shaft 8 axis 8a, that is to say, the shaft which slides inside it.

In an alternative embodiment to the one described above, the actuator part 11a of the locking/release means 11 may be connected to a head 1 limb 11m, separated from the unit 3, both to make the unit 3 lighter and to avoid the presence of relative tubes for pressurised air arriving as far as the unit 3, for controlling the pneumatic cylinder. Obviously - in such architectures - the tool is only unlocked with the head 1 in a kinematic chain configuration in which the parts 11a and 11b are adjacent, so that the active limb of the part 11a can act upon the control rod by means of the passage represented by the hole in the light cover 27.

Operationally, the device structured in this way in the form of a head 1 with a motor-driven tool drive unit 3, fulfils the preset aims thanks to the mutual arrangements of the various elements illustrated, without having to change the remaining machine structure which already exists.

As regards the movements of the kinematic chain which supports the motor-driven unit 3, it may be observed that, as described above, relative to the mutual positions for the geometrical elements of the head 1, the geometrical axes W1, W2 and 8a converge at point C where - thanks to rotation of the limb 16 on the joint R1 - the axis W2 can describe a conical surface with vertex C, with axis W1 and half-opening equal to 45°, whilst - thanks to rotation of the limb 17 on the joint R2 - the axis 8a can describe a conical surface with vertex C, with axis W2 and half-opening equal to 45°.

The two types of rotation - about W2 and about W1 - can demonstrate how the tool axis 8a can be angled according to any of the straight lines belonging to the star with point C as the support, and in particular - as illustrated in Figure 1 - it can assume all directions in the horizontal plane, that is to say, parallel with the worktable 5, and the vertical direction coinciding with the axis W1, that is to say, perpendicular to the worktable 5. The direction identified by the tip of the tool always has a component facing the worktable 5, which may be null at most. In practice, with point C being fixed, the position of the tool 4 axis 8a is identified by the point C and by any other point Q of the axis 8a, where the motion of the point Q - by construction - must occur on a spherical surface with centre C and radius CQ, designed to represent a movement by a rigid body with a fixed point.

The possibilities for movement deriving from the mobility of the upright 19 and the slide 18 on it, as well as the limb 15 on the slide 18, guarantee the possibility of placing point C at any point in the operating zone of the machine worktable 5.

On the joints R1 and R2 (or rather on their ring nuts) there is a fixed origin of the respective angles of rotation and a measuring scale for them. The angles measured on such R1 and R2 scales form a pair of parameters necessary and sufficient for identifying the geometrical configuration of the head 1, that is to say, for defining the position of the tool axis, where - starting for example from the respective origins on the graduated scales - the order with which rotations on the two joints are attributed has no influence, since the two axes are not absolutely fixed in space (as this would prevent switching of the composition of the finished rotations), but the second axis W2 is rotated by the first axis W1. In other words, the two rotations measured on the joints R1 and R2 constitute two parameters, known as Lagrangians, which unambiguously identify the system configuration, where, as is known, said configuration does not depend on the order with which such parameters are assigned.

As regards operation inside the unit 3 it is evident, partly with the aid of Figure 4, that the rotary motion generated by the electric motor with the shaft 7 as the rotor is transmitted to the adjacent and parallel shaft 8 by the system consisting of the shaft 7 pulley 7p, the toothed belt 10, and the shaft 8 pulley 8p. The tool 4, with the relative tool holder, is supported at the operating end 8e of the shaft 8 and projects from the unit 3 casing 6, and can perform boring/routing machining operations on the workpiece 2 fixed to the machine worktable 5.

The operation of the tool release device is easily explainable by observing that, while the piston 24 performs an active release stroke, towards the back of the casing 6, the relative rod activates the rocker arm 25, which acts upon the release rod contained in the shaft cavity, where the rod return stroke - and that of the piston 24 - is directly controlled by the elastic reaction of the Belleville washers acting between the shaft 8 and the rod.

It is important to emphasise again, as already indicated relative to the fact that (see Figure 2) the reduced dimension of the motor-driven unit 3 - in particular along the radial half-lines s originating from the operating axis 8a and moving away from the driving axis 7a - allow the unit 3 to approach the worktable 5, getting very close to it, for all head 1 machining configurations in which the axis 8a is horizontal, for example for horizontal routing/boring. Therefore, it is thanks to the special configuration of the invention described that, with the tool axis 8a substantially horizontal, machining can be performed with tool axis heights H very much lower relative to the machine worktable 5, in other words, providing the system with a minimum machining height Hmin allowed that is very low on the worktable 5, giving optimum accessibility on the lateral walls of a workpiece, even if the workpiece is fixed directly to the machine worktable 5.

The invention described can be subject to modifications and variations without thereby departing from the scope of the inventive concept as defined in the claims. Moreover, all the details of the invention may be substituted by technically equivalent elements.

## Claims

1. A jointed machining head (1), for machine tools used to machine workpieces (2) made of wood or similar materials which are secured to a machine worktable (5), the head configured in the form of a kinematic chain with at least one first joint (R1) capable of rotation about at least one joint geometrical axis (W1); the head comprising a compact motor-driven unit (3), designed to rotationally drive a tool (4) rapidly about an axis identified in the unit (3) in order to perform routing, boring and similar operations on the workpieces (2); it being possible to position the compact motor-driven unit (3) using the kinematic chain at least in an operating position (12) in which the tool (4) axis of rapid rotation is parallel with the machine worktable (5), the head being **characterised in that** the compact motor-driven unit (3) comprises, in a shaft support casing (6), a first, driving part, consisting of an electric motor whose rotor is a first, driving shaft (7), having a first axis of rotation (7a) in the unit (3); and a second, operating part, consisting of a second, operating shaft (8), having a second axis of rotation (8a) in the unit (3), parallel with and close to the previous axis of rotation (7a), and having an operating end (8e), designed to coaxially support the tool (4) operating outside the casing (6), the end (8e) allowing the tool (4) to assume the second axis of rotation (8a) as is axis of rapid rotation; the second shaft (8) being rotationally driven by the first shaft (7) through means (9) for transmitting rotational motion; where, due to the absence of the electric pack on the second shaft (8), the casing (6) is advantageously made with a much reduced dimension along the radial half-lines (s) originating from the second axis of rotation (8a) and moving away from the first axis of rotation (7a), so that in the one or more operating positions (12), the radial distance between the second, operating shaft (8) and the machine worktable (5), and each individual workpiece (2) being machined, is very small, and **in that** the the rotary motion transmission means (9) for driving the second shaft (8) by means of the first shaft (7), are located in the casing (6).

2. The jointed machining head (1) for machine tools according to claim 1, **characterised in that** in the unit (3), the rotary motion transmission means (9) for driving the second shaft (8) by means of the first shaft (7), consist of two toothed pulleys (7p) and (8p), respectively keyed to the shafts (7) and (8), and a toothed belt (10) for transmission between the pulleys.

3. The jointed machining head (1) for machine tools according to claim 2, **characterised in that** in the unit (3), on the first shaft (7) and the second shaft (8), the toothed pulleys (7p) and (8p) are keyed at a section made with a plane perpendicular to the shafts, which meets the operating shaft (8) substantially at the end (8f) of the latter, opposite the operating end (8e).

4. The jointed machining head (1) for machine tools according to any of the foregoing claims, **characterised in that** in the unit (3), the second, operating shaft (8) is axially hollow, there being means (11) for locking/releasing the tool on/from the operating end (8e) of the shaft, said means (11) being partly located on the side of the end (8f) opposite the operating end (8e), and partly passing through the second shaft (8) in an axial direction.

5. The jointed machining head (1) for machine tools according to any of the claims from 1 to 3, **characterised in that** the second, operating shaft (8) is axially hollow, there being means (11) for locking/releasing the tool on/from the operating end (8e) of the shaft; a first, actuator part (11a) of the means (11) being attached to a head (1) limb (11m), separated from the unit (3), and a second part (11b) of the means (11) being attached to the unit (3), passing through the shaft (8) axially, it being possible to activate it using the first actuator part (11a), in at least one configuration of the kinematic chain which forms the head (1) - designed at least to release the tool - in which the parts (11a) and (11b) are positioned so that they are adjacent.

6. The jointed machining head (1) for machine tools according to any of the foregoing claims, **characterised in that** the geometrical axis (W1) about which the first joint (R1) can rotate, is perpendicular to the machine worktable (5), and the second axis of rotation (8a) is parallel with the machine (5) worktable, for at least one configuration of the kinematic chain which forms the jointed machining head (1).

7. The jointed machining head (1) for machine tools according to claim 6, **characterised in that** the plane identified by the two axes of rotation (7a) and (8a) is perpendicular to the machine worktable (5) where, of the two shafts, the first, driving shaft (7) and the second, operating shaft (8), the latter is closer to the machine worktable (5).

8. The jointed machining head (1) for machine tools according to any of the foregoing claims, in which the kinematic chain which forms the head (1) has at least one second joint (R2) capable of rotation about at least one joint geometrical axis (W2), the head being **characterised in that** the second axis (8a) about which the tool (4) is rapidly turned, and the geometrical axes (W1) and (W2), are incident with one another at a point (C), at least for a set of positions (13) of the kinematic chain; where, within this set of positions (13), the first joint (R1) allows rotation of the axis (W2) about the axis (W1) according to a first cone with vertex (C) and half-opening equal to 45°, the second joint (R2) allowing rotation, independent of the previous movements, of the second axis (8a) about the axis (W2) according to a second cone with vertex (C) and half-opening equal to 45°.

9. The jointed machining head (1) for machine tools according to claim 8, **characterised in that** the axis of rotation (W1) is constantly perpendicular to the machine worktable (5), at least for a set of positions (14) in the set of positions (13) of the kinematic chain; such that in the positions (14) the axis of rotation (8a) may occupy - by 180° rotation about the axis (W2) - both the operating position parallel with the machine worktable (5), and the operating position perpendicular to the worktable (5), and coinciding with the axis (W1).

## Patentansprüche

1. Gegliederter Bearbeitungskopf (1) für Werkzeugmaschinen, verwendet zur Bearbeitung von Werkstücken (2) aus Holz oder ähnlichen Materialien, welche an einem Aufspanntisch (5) der Maschine befestigt sind, und der Kopf in Form einer kinematischen Kette konfiguriert ist, mit wenigstens einem Glied (R1), das eine Umdrehung um eine geometrische Achse (W1) des wenigstens einen Gliedes ausführen kann; wobei der Kopf eine kompakte, motorgetriebene Einheit (3) enthält, dazu bestimmt, ein Werkzeug (4) schnelldrehend um eine Achse anzutreiben, die in der Einheit (3) identifiziert ist, um Fräs-, Bohr- und ähnliche Arbeiten an den Werkstücken (2) auszuführen; wobei es möglich ist, die kompakte, motorgetriebene Einheit (3) unter Verwendung der kinematischen Kette wenigstens in einer Arbeitsposition (12) zu positionieren, in welcher die schnelldrehende Achse des Werkzeugs (4) parallel zu dem Aufspanntisch (5) der Maschine ist, wobei der Kopf **dadurch gekennzeichnet ist, dass** die kompakte, motorgetriebene Einheit (3) in einem Wellengehäuse (6) einen ersten, antreibenden Teil enthält, bestehend aus einem Elektromotor, dessen Rotor eine erste Antriebswelle (7) ist, die eine erste Drehachse (7a) in der Einheit (3) hat; und einen zweiten Betriebsteil, bestehend aus einer zweiten Arbeitswelle (8), die eine zweite Drehachse (8a) in der Einheit (3) hat, parallel zu und dicht an der vorgenannten Drehachse (7a), sowie ein Arbeitsende (8e), dazu bestimmt, koaxial das ausserhalb des Gehäuses (6) arbeitende Werkzeug (4) zu tragen, wobei es das Ende (8e) dem Werkzeug (4) ermöglicht, die zweite Drehachse (8a) als seine schnelldrehende Achse anzunehmen; wobei die zweite Welle (8) in der Umdrehung durch die erste Welle (7) angetrieben ist, und zwar über Mittel (9) zum Übertragen der Drehbewegung; wo, zurückzuführen auf das Fehlen des Elektropaketes an der zweiten Welle (8), das Gehäuse (6) vorteilhafterweise mit einer stark reduzierten Abmessung entlang den radialen Halbgeraden (s) ausgeführt ist, die von der zweiten Drehachse (8a) ausgehen und sich von der ersten Drehachse (7a) entfernend bewegen, so dass in der einen oder in mehreren Betriebspositionen (12) der radiale Abstand zwischen der zweiten Arbeitswelle (8) und dem Aufspanntisch (5) der Maschine und einem jeden einzelnen, zu bearbeitenden Werkstück (2) sehr klein ist, **und dadurch**, dass die Übertragungsmittel (9) der Drehbewegung für den Antrieb der zweiten Welle (8) mit Hilfe der ersten Welle (7) in dem Gehäuse (6) angeordnet sind.

2. Gegliederter Bearbeitungskopf (1) für Werkzeugmaschinen nach Patentanspruch 1, **dadurch gekennzeichnet, dass** in der Einheit (3) die Übertragungsmittel (9) der Drehbewegung für den Antrieb der zweiten Welle (8) mit Hilfe der ersten Welle (7) aus zwei verzahnten Riemenscheiben (7p) und (8p) bestehen, jeweils aufgezogen auf die Wellen (7) und (8), und aus einem Zahnriemen (10) zum Übertragen zwischen den Riemenscheiben.

3. Gegliederter Bearbeitungskopf (1) für Werkzeugmaschinen nach Patentanspruch 2, **dadurch gekennzeichnet, dass** in der Einheit (3) die verzahnten Riemenscheiben (7p) und (8p) auf die erste Welle (7) und die zweite Welle (8) an einem Abschnitt aufgezogen sind, der mit einer lotrecht zu den Wellen verlaufenden Ebene versehen ist, welcher auf die Arbeitswelle (8) im wesentlichen am Ende (8f) letzterer trifft, entgegengesetzt von dem Arbeitsende (8e).

4. Gegliederter Bearbeitungskopf (1) für Werkzeugmaschinen nach einem beliebigen der vorstehenden Patentansprüche, **dadurch gekennzeichnet, dass** in der Einheit (3) die zweite Arbeitswelle (8) axial hohl ist, wobei Mittel (11) zum Spannen/Freigeben des Werkzeugs an/von dem Arbeitsende (8e) der Welle vorhanden sind, und wobei die genannten Mittel (11) auf der Seite des Endes (8f) entgegengesetzt von dem Arbeitsende (8e) angeordnet sind und teilweise in einer axialen Richtung durch die zweite Welle (8) gehen.

5. Gegliederter Bearbeitungskopf (1) für Werkzeugmaschinen nach einem beliebigen der Patentansprüche von 1 bis 3, **dadurch gekennzeichnet, dass** die zweite Arbeitswelle (8) axial hohl ist, wobei Mittel (11) zum Spannen/Freigeben des Werkzeugs an/von dem Arbeitsende (8e) der Welle vorhanden sind; wobei ein erster Antriebsteil (11a) der Mittel (11) an ein Glied (11m) des Kopfes (1) angeschlossen ist, getrennt von der Einheit (3), und ein zweiter Teil (11b) der Mittel (11) axial durch die Welle (8) verlaufend an die Einheit (3) angeschlossen ist, und wobei es möglich ist, diesen durch den ersten Antriebsteil (11a) zu aktivieren, und zwar in wenigstens einer Konfiguration der den Kopf (1) bildenden kinematischen Kette - dazu bestimmt, wenigstens das Werkzeug freizugeben -, in welcher die Teile (11a) und (11b) so positioniert sind, dass sie aneinandergrenzen.

6. Gegliederter Bearbeitungskopf (1) für Werkzeugmaschinen nach einem beliebigen der vorstehenden Patentansprüche, **dadurch gekennzeichnet, dass** die geometrische Achse (W1), um welche sich das erste Glied (R1) drehen kann, lotrecht zu dem Aufspanntisch (5) der Maschine ist, und die zweite Drehachse (8a) parallel zu dem Aufspanntisch (5) der Maschine verläuft, und zwar für wenigstens eine Konfiguration der kinematischen Kette, welche den gegliederten Bearbeitungskopf (1) bildet.

7. Gegliederter Bearbeitungskopf (1) für Werkzeugmaschinen nach Patentanspruch 6, **dadurch gekennzeichnet, dass** die durch die beiden Drehachsen (7a) und (8a) beschriebene Ebene lotrecht zu dem Aufspanntisch (5) der Maschine verläuft, wobei von den beiden Wellen, der ersten Antriebswelle (7) und der zweiten Arbeitswelle (8), sich letztere dichter an dem Aufspanntisch (5) der Maschine befindet.

8. Gegliederter Bearbeitungskopf (1) für Werkzeugmaschinen nach einem beliebigen der vorstehenden Patentansprüche, bei welchem die den Kopf (1) bildende kinematische Kette wenigstens ein zweites Glied (R2) aufweist, das eine Umdrehung um wenigstens eine geometrische Achse (W2) des Gliedes ausführen kann, wobei der Kopf **dadurch gekennzeichnet ist, dass** die zweite Achse (8a), um welche das Werkzeug (4) schnell gedreht wird, und die geometrischen Achsen (W1) und (W2) wenigstens für eine Reihe von Positionen (13) der kinematischen Kette an einem Punkt (C) miteinander einfallend sind; wobei innerhalb dieser Reihe von Positionen (13) das erste Glied (R1) die Umdrehung der Achse (W2) um die Achse (W1) erlaubt, und zwar nach einem ersten Kegel mit einer Spitze (C) und Halböffnung entsprechend 45°, und das zweite Glied (R2), unabhängig von den vorherigen Bewegungen, die Umdrehung der zweiten Achse (8a) um die Achse (W2) erlaubt, und zwar nach einem zweiten Kegel mit einer Spitze (C) und Halböffnung entsprechend 45°.

9. Gegliederter Bearbeitungskopf (1) für Werkzeugmaschinen nach Patentanspruch 8, **dadurch gekennzeichnet, dass** die Drehachse (W1) konstant lotrecht zu dem Aufspanntisch (5) der Maschine ist, wenigstens für eine Serie von Positionen (14) innerhalb der Serie von Positionen (13) der kinematischen Kette; und zwar so, dass in der Serie von Positionen (14) die Drehachse (8a) - durch Umdrehung um 180° um die Achse (W2) - sei es die Arbeitsposition parallel zu dem Aufspanntisch (5) der Maschine, wie auch die Arbeitsposition lotrecht zu dem Aufspanntisch (5) belegen kann, übereinstimmend mit der Achse (W1).

## Revendications

1. Une tête d'usinage articulée (1), pour des machines-outils utilisées pour usiner des pièces à usiner (2) en bois ou matériaux similaires qui sont immobilisées sur une table d'usinage (5) de machine, la tête étant configurée sous forme d'une chaîne cinématique avec au moins une première articulation (R1) à même de tourner autour d'au moins un axe géométrique (W1) de l'articulation elle-même ; la tête comprenant une unité motorisée compacte (3) destinée à mettre en rotation rapide un outil (4) autour d'un axe identifié dans ladite unité (3) pour exécuter des opérations de fraisage, perçage et similaires sur les pièces à usiner (2) ; l'unité motorisée compacte (3) pouvant être positionnée par l'intermédiaire de la chaîne cinématique au moins dans une position opérationnelle (12) dans laquelle l'axe de rotation rapide de l'outil (4) est parallèle à la table d'usinage (5) de machine, la tête étant **caractérisée en ce que** l'unité motorisée compacte (3) comprend, dans une carcasse (6) de support des arbres, une première partie, d'entraînement, consistant en un moteur électrique dont le rotor est un premier arbre (7), d'entraînement, ayant une premier axe de rotation (7a) dans l'unité (3) ; et une seconde partie, opérationnelle, consistant en un second arbre (8), opérationnel, ayant un second axe de rotation (8a) dans l'unité (3), parallèle au premier axe de rotation (7a) et situé à proximité de celui-ci, et présentant une extrémité opérationnelle (8e) destinée à supporter coaxialement l'outil (4) opérant à l'extérieur de la carcasse (6), l'extrémité (8e) permettant à l'outil (4) de prendre le second axe de rotation (8a) comme axe de rotation rapide ; le second arbre (8) étant mis en rotation par le premier arbre (7) par l'intermédiaire de moyens (9) de transmission du mouvement de rotation ; où, en raison de l'absence du paquet électrique sur le second arbre (8), la carcasse (6) est avantageusement réalisée avec une dimension très réduite le long des demi-droites radiales (s) qui partent du second axe de rotation (8a) et s'éloignent du premier axe de rotation (7a), de sorte que dans la ou les positions opérationnelles (12), la distance radiale entre le second arbre (8), opérationnel, et la table d'usinage (5) de machine, et chaque pièce à usiner (2) unitaire en cours d'usinage, est très petite, et **en ce que** les moyens (9) de transmission du mouvement de rotation destinés à entraîner le second arbre (8) par l'intermédiaire du premier arbre (7) sont situés dans la carcasse (6).

2. La tête d'usinage articulée (1) pour machines-outils selon la revendication 1, **caractérisée en ce que** dans l'unité (3), les moyens (9) de transmission du mouvement de rotation, destinés à entraîner le second arbre (8) par l'intermédiaire du premier arbre (7), consistent en deux poulies dentées (7p) et (8p), respectivement calées sur les arbres (7) et (8), et en une courroie crantée (10) pour la transmission entre les poulies.

3. La tête d'usinage articulée (1) pour machines-outils selon la revendication 2, **caractérisée en ce que** dans l'unité (3), sur le premier arbre (7) et le second arbre (8), les poulies dentées (7p) et (8p) sont calées au niveau d'une section effectuée avec un plan perpendiculaire aux arbres, qui rejoint l'arbre d'entraînement (8) essentiellement au niveau de l'extrémité (8f) de ce dernier, opposée à l'extrémité opérationnelle (8e).

4. La tête d'usinage articulée (1) pour machines-outils selon l'une quelconque des revendications précédentes, **caractérisée en ce que** dans l'unité (3), le second arbre (8), opérationnel, est axialement creux, des moyens (11) étant prévus pour le blocage/déblocage de l'outil sur/de l'extrémité opérationnelle (8e) de l'arbre, lesdits moyens (11) étant situés en partie du côté de l'extrémité (8f) opposée à l'extrémité opérationnelle (8e) et traversant en partie le second arbre (8) en sens axial.

5. La tête d'usinage articulée (1) pour machines-outils selon l'une quelconque des revendications de 1 à 3, **caractérisée en ce que** le second arbre (8), opérationnel, est axialement creux, des moyens (11) étant prévus pour le blocage/déblocage de l'outil sur/de l'extrémité opérationnelle (8e) de l'arbre ; une première partie d'actionnement (11a) des moyens (11) étant associée à un membre (llm) de ladite tête (1), distinct de l'unité (3), et une seconde partie (11b) des moyens (11) étant associée à l'unité (3), en passant axialement à travers l'arbre (8), et pouvant être actionnée par le biais de la première partie (11a) d'actionnement dans au moins une configuration de la chaîne cinématique qui forme la tête (1) - destinée au moins à débloquer l'outil - dans laquelle les parties (11a) et (11b) sont positionnées de manière à être adjacentes.

6. La tête d'usinage articulée (1) pour machines-outils selon l'une quelconque des revendications précédentes, **caractérisée en ce que** l'axe géométrique (W1) autour duquel peut tourner la première articulation (R1) est perpendiculaire à la table d'usinage (5) de machine, et le second axe de rotation (8a) est parallèle à la table d'usinage (5) de machine, pour au moins une configuration de la chaîne cinématique qui forme la tête d'usinage articulée (1).

7. La tête d'usinage articulée (1) pour machines-outils selon la revendication 6, **caractérisée en ce que** le plan identifié par les deux axes de rotation (7a) et (8a) est perpendiculaire à la table d'usinage (5) de machine où, des deux arbres, à savoir, le premier arbre (7) d'entraînement et le second arbre (8) opérationnel, ce dernier est plus près de la table d'usinage (5) de machine.

8. La tête d'usinage articulée (1) pour machines-outils selon l'une quelconque des revendications précédentes, dans laquelle la chaîne cinématique qui forme la tête (1) a au moins une deuxième articulation (R2) à même de tourner autour d'au moins un axe géométrique (W2) de l'articulation elle-même, la tête étant **caractérisée en ce que** le second axe (8a), autour duquel l'outil (4) est mis en rotation rapide, et les axes géométriques (W1) et (W2) sont incidents en un point (C), au moins pour un ensemble de positions (13) de la chaîne cinématique ; où, dans les limites de cet ensemble de positions (13), la première articulation (R1) permet une rotation de l'axe (W2) autour de l'axe (W1) selon un premier cône de sommet (C) et une demi-ouverture égale à 45°, la deuxième articulation (R2) permettant une rotation, indépendante des mouvements précédents, du second axe (8a) autour de l'axe (W2) selon un deuxième cône de sommet (C) et une demi-ouverture égale à 45°.

9. La tête d'usinage articulée (1) pour machines-outils selon la revendication 8, **caractérisée en ce que** l'axe de rotation (W1) est constamment perpendiculaire à la table d'usinage (5) de machine, au moins pour un ensemble de positions (14) compris dans l'ensemble de positions (13) de la chaîne cinématique ; de sorte que dans les positions (14), l'axe de rotation (8a) peut occuper - par le biais d'une rotation de 180° autour de l'axe (W2) - aussi bien la position opérationnelle parallèle à la table d'usinage (5) de machine que la position opérationnelle perpendiculaire à la table d'usinage (5), et coïncidant avec l'axe (W1).
